Europäisches Patentamt

European Patent Office

Office européen des brevets

(11) Veröffentlichungsnummer: **0 410 124 A2**

# EUROPÄISCHE PATENTANMELDUNG

(21) Anmeldenummer: 90111137.7

(22) Anmeldetag: **13.06.90**

(51) Int. Cl.⁵: **F16B 13/08**

(30) Priorität: **25.07.89 DE 3924535**

(43) Veröffentlichungstag der Anmeldung:
**30.01.91 Patentblatt 91/05**

(84) Benannte Vertragsstaaten:
**AT BE CH DE DK ES FR GB IT LI NL**

(71) Anmelder: **fischerwerke Artur Fischer GmbH
& Co. KG KG**
**Weinhalde 14 - 18**
**D-7244 Waldachtal 3/Tumlingen(DE)**

(72) Erfinder: **Hoppe, Hartmut**
**Lerchenstrasse 45**
**D-7240 Horb(DE)**
Erfinder: **Johannsen, Heinrich**
**Talstrasse 5**
**D-7244 Waldachtal 3(DE)**
Erfinder: **Luz, Heinrich**
**Kreuzäckerstrasse 14**
**D-7244 Waldachtal 2(DE)**
Erfinder: **Mayer, Burkhard, Dr.Dipl.-Ing.**
**Altdorfer Strasse 37**
**D-7038 Holzgerlingen(DE)**
Erfinder: **Schneider, Jürgen, Dipl.-Ing. (FH)**
**Im Martinskirchle 24**
**D-7244 Waldachtal 3(DE)**
Erfinder: **Seibold, Günter, Dipl.-Ing.**
**Beethovenstrasse 11**
**D-7293 Pfalzgrafenweiler(DE)**
Erfinder: **Stoll, Hans-Peter, Dipl.-Ing. (BA)**
**Herdwasenstrasse 12**
**D-7295 Dornstetten-Hallwangen(DE)**

(54) **Federklappdübel.**

(57)
1. Federklappdübel

2.1. Federklappdübel werden als Befestigungsele-mente im Bereich von Hohlwänden und derglei-chen eingesetzt. Gegen eine Federkraft zusam-menklappbare Klappbügel schwenken im Hohl-raum des Mauerwerks nach außen, so daß der Federklappdübel nicht mehr durch die Montage-öffnung herausgezogen werden kann.

2.2. Als Federelement wird eine einfache Blattfe-der vorgeschlagen, die unter die Klappbügel greift. Als Schwenkachse kann ein flacher Steg in Lageröffnungen der Klappbügel eingreifen.

Fig.1

EP 0 410 124 A2

# FEDERKLAPPDÜBEL

Die Erfindung betrifft einen Federklappdübel gemäß der Gattung des Hauptanspruchs.

Es sind Federklappdübel bekannt, die als Befestigungselemente an Hohldecken, Hohlwänden oder dergleichen Verwendung finden. Ein solcher Federklappdübel kann zwei seitlich abstehende Klappbügel haben, die schwenkbar an einem Gewindestab abstehen. Eine Feder hält die Klappbügel in waagerechter Stellung, jedoch lassen sich die Klappbügel nach unten gegen die Kraft der Feder verschwenken, bis die Klappbügel eng am Gewindestab anliegen. In dieser Stellung läßt sich der Gewindestab mit den an ihn angelegten Klappbügeln in eine Bohrung einer Decke einführen, wobei die Klappbügel in einem in der Decke vorhandenen Hohlraum mittels Federkraft aufklappen und waagrecht am Gewindestab abstehen. Der Federklappdübel läßt sich mit abstehenden Klappbügeln nicht mehr durch die Montageöffnung herausziehen, so daß am Gewindestab ein zu befestigender Gegenstand sicher befestigt werden kann.

Die bekannten Federklappdübel verwenden eine wenigstens in einer Windung verlaufende Drahtfeder, deren Enden unter die Klappbügel greifen. Die durch die Windung der Drahtfeder gebildete Spirale muß um die Schwenkachse der Klappbügel geführt werden, wodurch die Montage des Federklappdübels erheblich erschwert wird. Insbesondere muß bei den herkömmlichen Federklappdübeln das Federelement von Hand eingesetzt werden, da der Montagevorgang sehr diffizil ist.

Der Erfindung liegt die Aufgabe zugrunde, einen Federklappdübel zu schaffen, der verhältnismäßig einfach zu montieren ist.

Die Lösung dieser Aufgabe wird durch die im Hauptanspruch angegebenen Merkmale erhalten. Das als Blattfeder ausgebildete Federelement ist sehr einfach herstellbar und erleichtert den Zusammenbau des Federklappdübels erheblich. Das Federelement besteht im wesentlichen aus einem schmalen Federband, welches eine Durchgangsöffnung für die Gewindestange hat. Die Gewindestange muß bei der Montage lediglich durch die Öffnung durchgesteckt werden, so daß dann die beiden seitlichen Klappbügel von der Seite auf das Federelement aufgeschoben werden, bis die Klappbügel mit ihren Lageröffnungen auf ihrer Schwenkachse einrasten.

Die Durchgangsöffnung läßt sich in besonders einfacher Weise in Form von ineinandergreifenden kreisrunden Ausstanzungen ausbilden, so daß sich eine langgestreckte Durchgangsöffnng ergibt, die von schmalen seitlichen Stegen begrenzt ist. Beim Zusammenklappen der Klappbügel wird die Blattfeder insbesondere im Bereich der schmalen Stege abgebogen, wobei die schmalen Stege ein günstiges Biegeverhalten aufweisen.

Die Blattfeder kann einen Hauptwölbungsradius haben, der sich nahezu über ihre gesamte Länge erstreckt. Die Blattfeder ist durch den Hauptwölbungsradius bereits etwas vorgebogen, wodurch das Zusammenklappen der Klappbügel erleichtert wird. Ein kleiner Gegenradius an beiden Enden der Blattfeder hält die Klappbügel in der gewünschten waagerechten Stellung, wenn sich die Klappbügel in der entspannten, waagerechten Position befinden.

Die Klappbügel sind vorzugsweise im Querschnitt U-förmig ausgebildet, wobei die Blattfeder zwischen den beiden nach unten abstehenden Seitenwänden der Klappbügel verläuft. Die Blattfeder erhält somit durch die Seitenwände eine gute seitliche Führung.

Die am Gewindestab für die Klappbügel ausgebildete Schwenkachse kann auf einfache Weise als flacher Steg zu beiden Seiten des Gewindestabs abstehen. Ein derartiger flacher Steg ist besonders einfach herstellbar. Er kann eine Gewindebohrung besitzen und auf den Gewindestab aufgeschraubt sein.

Die Erfindung wird nachfolgend anhand der Zeichnung näher erläutert.

Es zeigen:

Figur 1 und Figur 2 jeweils eine Ausführungsform eines Federklappdübels,

Figur 3 die Seitenansicht einer Blattfeder, die in einem der Federklappdübel gemäß Figur 1 und Figur 2 Verwendung findet,

Figur 4 die Draufsicht auf die Blattfeder gemäß Figur 3,

Figur 5, Figur 6 und Figur 7 einen Federklappdübel in Seitenansicht, von der Stirnseite und in Draufsicht.

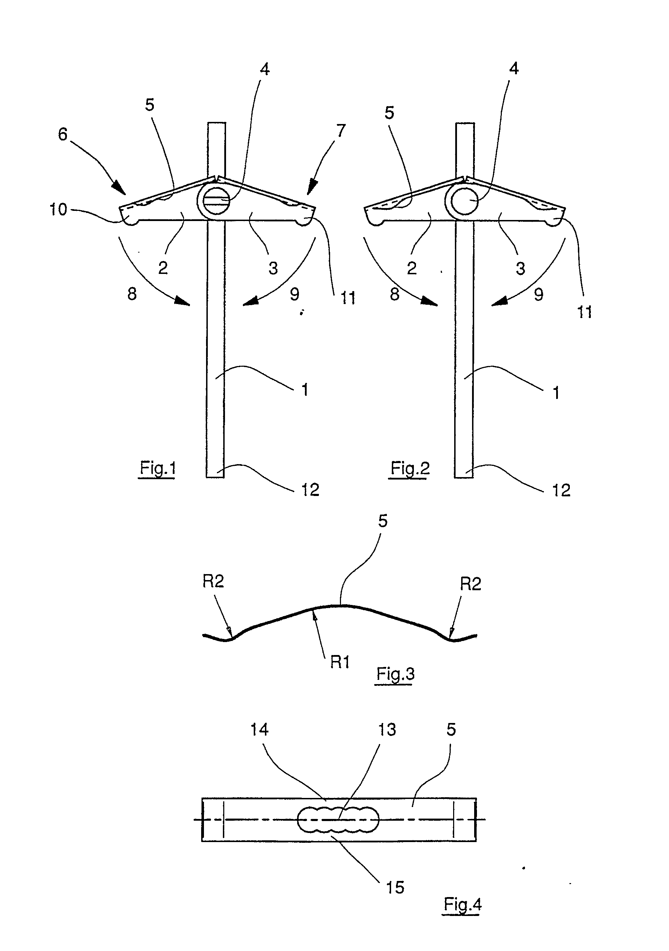

Der in Figur 1 dargestellte Federklappdübel besteht aus einem Gewindestab 1, zwei seitlich abstehenden Klappbügeln 2, 3, die auf einer Schwenkachse 4 gelagert sind, und einem als Blattfeder ausgebildeten Federelement 5.

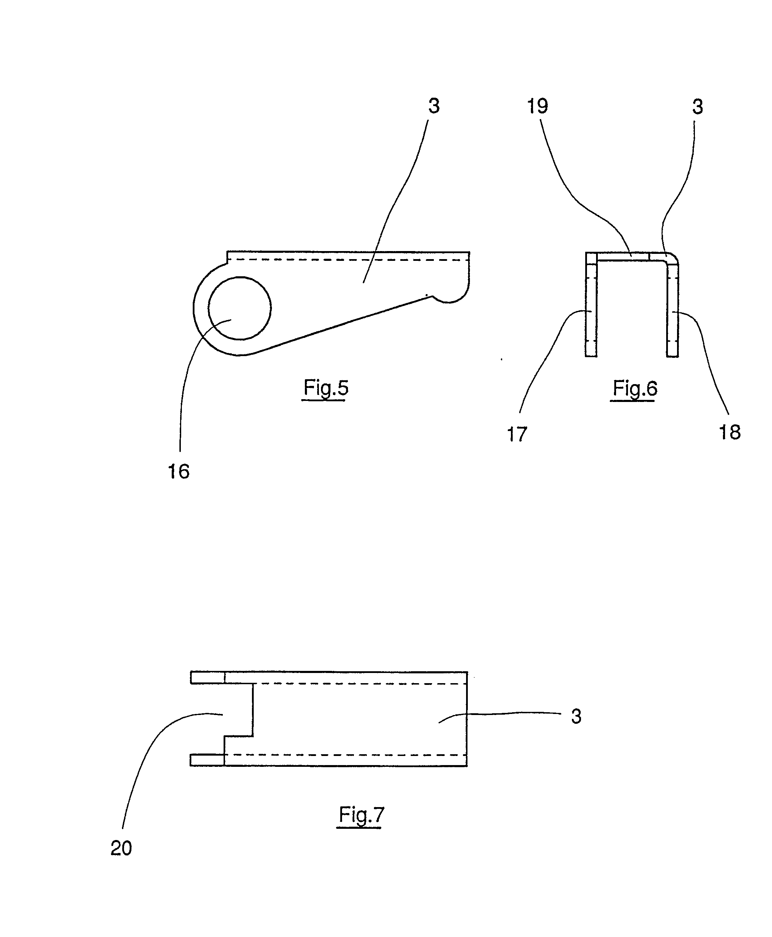

Der in Figur 2 dargestellte Federklappdübel ist gleichermaßen aufgebaut, jedoch unterscheiden sich die bei den Federklappdübel bezüglich ihrer Schwenkachse 4. Bei dem in Figur 1 dargestellten Federklappdübel ist die Schwenkachse 4 als flacher Steg ausgebildet, während bei dem Federklappdübel gemäß Figur 2 die Schwenkachse als Rundstab ausgebildet ist. Die Blattfeder 5 greift in Figur 1 mit ihren Enden durch Öffnungen 6, 7, die in den Klappbügeln 2, 3 vorgesehen sind. Bei der Ausführungsform gemäß Figur 2 sind keine derartigen Öffnungen vorgesehen, weshalb die Enden der Blattfeder 5 innerhalb der U-förmig ausgebildeten Klappbügel 2, 3 angeordnet sind. In den Figuren 5 bis 7 ist der Aufbau eines Klappbügels im einzelnen dargestellt.

Die Klappbügel 2, 3 lassen sich in Pfeilrichtung 8, 9 nach unten verschwenken, bis ihre Enden 10, 11 am Gewindestab 1 anliegen. In dieser Position läßt sich der Federklappdübel in ein verhältnismäßig kleines Bohrloch einer Decke oder einer Wand einführen, bis die beiden Klappbügel 2, 3 sich in einem im Mauerwerk befindlichen Hohlraum wieder in ihre waagerechte Ausgangsposition zurückstellen. Die Blattfeder 5 drückt dabei beide Klappbügel 2, 3 in die Ausgangsposition zurück, wie sie in den Figuren 1 und 2 dargestellt ist. Ein derart in einen Hohlraum eines Mauerwerks oder einer Decke eingreifender Federklappdübel kann nun zur Befestigung eines beliebigen Gegenstandes verwendet werden. Zu diesem Zweck wird eine hier nicht dargestellte Befestigungsschraube auf das untere Ende 12 des Gewindestabes 1 aufgeschraubt, um beispielsweise einen zuvor aufgesetzte Latte zu befestigen. Selbstverständlich kann anstelle einer Befestigungsschraube auch ein sonstiges mit einem Gewinde versehenens Befestigungselement auf den Gewindestab 1 aufgeschraubt werden.

In Figur 3 ist die Form des Federelements 5 deutlicher dargestellt. Das als Blattfeder ausgebildete Federelement, dessen Draufsicht in Figur 4 dargestellt ist, besitzt einen Hauptwölbungsradius R1. An den Enden geht dieser Radius R1 in einen sehr viel kleineren Gegenradius R2 über.

In Figur 3 ist ersichtlich, daß die Blattfeder 5 eine Durchgangsöffnung 13 besitzt, die aus insgesamt fünf ineinandergreifenden kreisrunden Ausstanzungen besteht. Die Durchgangsöffnung 13 erhält somit eine langgestreckte Form und wird seitlich von schmalen Stegen 14, 15 begrenzt. Der Gewindestab 1 wird durch die Durchgangsöffnung 13 hindurchgeführt.

Der Klappbügel 3 gemäß Figur 2 ist in den Figuren 5 bis 7 in verschiedenen Ansichten dargestellt. In der Seitenansicht gemäß Figur 5 ist insbesondere die Lageröffnung 16 ersichtlich, durch die die Schwenkachse 4 (Figur 1 und Figur 2) greift.

Figur 6 zeigt das U-förmige Profil des Klappbügels 3, dessen beide Seitenwände 17, 18 leicht schräg nach unten abstehen. Die Blattfeder, die hier nicht dargestellt ist, verläuft zwischen den Seitenwänden 17, 18 und drückt von unten gegen die Wandung 19.

In Figur 7 ist die Draufsicht des Klappbügels 3 dargestellt. Im Bereich der seitlichen Lageröffnungen 16 ist an der waagerechten Wandung 19 eine Aussparung 20 ausgebildet, die den Schwenkbereich des Klappbügels nach oben begrenzt.

**Ansprüche**

1. Federklappdübel, der als Befestigungselement an Hohldecken, Hohlwänden oder dergleichen dient, mit einer Gewindestange, an der zwei seitlich abstehende, gegen die Federkraft eines Federelements zusammenklappbare Klappbügel schwenkbar gelagert sind, **dadurch gekennzeichnet, daß** das Federelement (5) eine oberhalb der gemeinsamen Schwenkachse (4) der Klappbügel (2, 3) angeordnete Blattfeder ist, die beide Klappbügel (2, 3) untergreift und die eine Durchgangsöffnung (13) hat, durch die die Gewindestange (1) verläuft.

2. Federklappdübel nach Anspruch 1, **dadurch gekennzeichnet, daß** die Durchgangsöffnung (13) von einer Reihe ineinandergreifender kreisrunder Ausstanzungen gebildet ist.

3. Federklappdübel nach einem der Ansprüche 1 oder 2, **dadurch gekennzeichnet, daß** die Blattfeder (5) einen Hauptwölbungsradius (R1) hat, der sich nahezu über ihre gesamte Länge erstreckt, wobei an den beiden Enden ein sehr viel kleinerer Gegenradius (R2) ausgebildet ist.

4. Federklappdübel nach einem der vorhergehenden Ansprüche, **dadurch gekennzeichnet, daß** die Klappbügel (2, 3) im Querschnitt U-förmig ausgebildet sind und deren offene Seite nach unten zeigt, und daß die Blattfeder zwischen den beiden Seitenwänden (17, 18) der Klappbügel (2, 3) verläuft.

5. Federklappdübel nach einem der vorhergehenden Ansprüche, **dadurch gekennzeichnet, daß** die Schwenkachse (4) als flacher Steg zu beiden Seiten des Gewindestabs (1) absteht und in an Seitenwänden (17, 18) der Klappbügel (2, 3) ausgebildete Lageröffnungen (16) eingreift.

Fig.1

Fig.2

Fig.3

Fig.4

3

19     3

Fig.5

Fig.6

17     18

16

3

Fig.7

20